# EUROPÄISCHE PATENTSCHRIFT

(11) **EP 0 672 455 B1**
(45) Veröffentlichungstag und Bekanntmachung des Hinweises auf die Patenterteilung: **28.10.1998**
(21) Anmeldenummer: 95103504.7
(22) Anmeldetag: 10.03.1995
(51) Int. Cl.: B03B 5/00, B03B 5/60, B03B 5/62

(54) **Vorrichtung zum Nassklassieren**
Device for wet classifying
Dispositif de séparation par voie humide

(30) Priorität: 15.03.1994 DE 4408785
(43) Veröffentlichungstag der Anmeldung: 20.09.1995
(73) Patentinhaber: FRYMA-Maschinen AG, CH-4310 Rheinfelden (CH)
(72) Erfinder: Bühler, Gerhard, Dipl.-Ing., D-79618 Rheinfelden/Karsau (DE)
(74) Vertreter: Tetzner, Michael, Dipl.-Ing.

(56) Entgegenhaltungen:
- DE-C- 3 127 599
- US-A- 1 374 098
- US-A- 1 512 469

## Beschreibung

Die Erfindung betrifft eine Vorrichtung zum Naßklassieren eines in einer Flüssigkeit suspendierten Feststoffgemisches in Grobgut und Feingut, entsprechend dem Oberbegriff des Anspruches 1.

Naßklassiervorrichtungen der vorausgesetzten Art können für verschiedene Zwecke und Produkte verwendet werden. Ein besonders interessantes Einsatzgebiet ist die Verwendung einer solchen Naßklassiervorrichtung im Mahlkreislauf einer Naßmahlanlage, in der Suspensionen mit relativ hohem Feststoffgehalt und/oder relativ hohem Feingutanteil verarbeitet werden. In solchen Fällen ist es wünschenswert, das in einer Flüssigkeit suspendierte und von einer Mühle kommende Feststoffgemisch in Grobgut (Grobgutfraktion) und Feingut (Feingutfraktion) zu klassieren, wobei die erhaltene Feingutfraktion in gewünschter Weise weiterverarbeitet oder auch als Fertiggut abgezogen werden kann, während die die noch nicht genügend zerkleinerten Feststoffanteile enthaltende Grobgutfraktion für einen erneuten Zerkleinerungsvorgang der oder einer Mühle zurückgeführt werden kann.

Eine Vorrichtung zum Naßklassieren der im Oberbegriff des Anspruches 1 vorausgesetzten Art läßt sich beispielsweise der DE-PS 31 27 599 entnehmen. In diesem Falle ist in einem Klassierrotor ein zentral bzw. koaxial zur Rotor-Drehachse liegender Aufgaberaum für das zu klassierende Feststoffgemisch vorgesehen, von dem aus ein im wesentlichen radial verlaufender Trennkanal zu einer am Außenumfang des Rotors vorgesehenen Grobgutaustragöffnung führt. Die eine Wand des radial verlaufenden Trennkanales wird durch eine Art Zunge gebildet, die eine Trennwand zu etwa parallel dazu verlaufenden Feingut-Umlenkkanal bildet und in einer äußeren Umlenkkante endet, um die die Feingutanteile des Feststoffgemisches umgelenkt und über den Umlenkkanal in einen exzentrisch zum zentralen Aufgaberaum axial verlaufenden Feingut-Abführkanal geleitet werden, der in einen unter dem Rotor angebrachten Feingut-Auffangbehälter mündet. Bei der praktischen Durchführung des Naßklassierens in dieser Vorrichtung steht dem zu trennenden Feststoffgemisch jedoch nur eine relativ kurze Reaktionszeit für die gewünschte Trennung in Grobgut und Feingut durch Fliehkrafteinwirkung zur Verfügung, so daß besonders bei relativ hochviskosen Feststoffgemischen (Flüssigkeitssuspensionen) ein ungenügender Klassierungs-Wirkungsgrad erzielt wird.

Der Erfindung liegt daher die Aufgabe zugrunde, eine Vorrichtung zum Naßklassieren der im Oberbegriff des Anspruches 1 vorausgesetzten Art zu schaffen, durch die bei relativ niedrigem Energiebedarf und auch bei verhältnismäßig hochviskosen Flüssigkeits-Feststoffgemischen (Suspensionen) eine optimale Klassierung des Aufgabegutes in Grobgut und Feingut mit einem besonders hohen Wirkungsgrad gewährleistet werden kann.

Diese Aufgabe wird erfindungsgemäß durch die im Kennzeichen des Anspruches 1 angegebenen Merkmale gelöst.

Vorteilhafte Ausgestaltungen und Weiterbildungen der Erfindung sind Gegenstand der Unteransprüche.

Bei dieser erfindungsgemäßen Naßklassiervorrichtung erstreckt sich der bzw. jeder Trennkanal - im Grundriß auf den Klassierrotor betrachtet - vom Aufgabegut-Zuführkanal bis zur Grobgut-Austragöffnung spiralförmig in diesem Klassierrotor, während der Feingut-Umlenkkanal, in dem der vom Feststoffgemisch abgetrennte Feingutanteil entgegen der Fliehkraftwirkung nach innen geleitet wird, radial zu dem koaxial zur zentralen Drehachse ausgerichteten Feingut-Abführkanal verläuft. Im Verhältnis zu diesem zentralen Feingut-Abführkanal ist dabei der Aufgabegut-Zuführkanal im Klassierrotor gegenüber der Drehachse (und damit auch gegenüber dem Feingut-Abführkanal) exzentrisch versetzt angeordnet.

In zahlreichen Versuchen, die im Zusammenhang mit der vorliegenden Erfindung durchgeführt worden sind, konnte bestätigt werden, daß durch die Form und vor allem auch durch die Länge jedes Trennkanales (in Umfangsrichtung des Klassierrotors) die Trennwirkung und damit der Klassierungs-Wirkungsgrad dieser neuen Naßklassiervorrichtung optimal dem jeweils zu verarbeitenden Feststoffgemisch angepaßt werden kann. Diese optimale Klassierung kann auch bei Flüssigkeits-Feststoff-Gemischen bzw. -Suspensionen gewährleistet werden, die eine relativ hohe Viskosität aufweisen, beispielsweise von > 100 mPa s und auch bei Feststoffgehalten von > 10 %, wie es bei den eingangs geschilderten Naßmahlanlagen häufig der Fall ist. Gerade in dem zuletzt genannten Zusammenhang erweist sich der erzielbare gute Klassierungs-Wirkungsgrad als besonders vorteilhaft im Hinblick auf eine Energieeinsparung, da nämlich bisher beispielsweise das gesamte Mahlgut mehreren aufeinanderfolgenden Zerkleinerungsdurchgängen unterworfen wurde, während aufgrund der erfindungsgemäß erzielbaren guten Trennwirkung im wesentlichne nur noch ungenügend zerkleinertes Grobgut einem weiteren Zerkleinerungsvorgang (auf die gewünschte Korngröße) unterworfen werden muß.

Die Länge und Gestaltung jedes Trennkanales im Klassierrotor können der günstigsten Reaktionszeit des zu trennenden Feststoffgemisches angepaßt werden. Dies kann beispielsweise mit einem spiralförmigen Trennkanal erfolgen, der sich über einen Teilumfangsbereich des Klassierrotors oder auch über einen Umfangsbereich des Klassierrotors von annähernd etwa 360° und mehr erstrecken kann. Eine weitere Möglichkeit in der Beeinflussung des Trenn- bzw. Klassierungs-Wirkungsgrades läßt sich dabei auch erreichen, wenn der lichte Querschnitt des bzw. jedes spiralförmigen Trennkanales sich kontinuierlich von innen nach außen erweitert. Bei dieser Gestaltung des Trennkanales kann zwar jede geeignete Querschnittsform zur Anwendung kommen; besonders bevorzugt wird jedoch ein etwa rechteckiger Querschnitt, dessen lange Rechteckseiten im wesentlichen rechtwinklig zur zentralen Drehachse verlaufen. Auf diese Weise kann man der jeweils radial äußeren Wandung des Trennkanales ein entsprechendes Gefälle (Steigung der Spirale) in Richtung auf die Grobgut-Austragöffnung erteilen, wodurch ein besonders verstopfungsfreies Auswerfen des Grobgutes am Außenumfang des Klassierrotors unterstützt wird. Dabei ist auch die radial innere Wandung jedes Trennkanales spiralförmig so geformt und ausgebildet, daß ein bestimmter Durchmesser erreicht werden kann, um sicherzustellen, daß das zu trennende Gut eine vorbestimmte Zeit lang einer genügend hohen Zentrifugalkraft ausgesetzt wird. Erst dann, wenn die groben, schweren Gutpartikel nach außen abgetrennt sind, verläuft diese innere Wandung des Trennkanales nach innen bzw. wird sie nach innen umgelenkt, um die genügend feinen Gutanteile des Feststoffgemisches nach innen umzulenken und radial nach innen zum Feingut-Abführkanal zu leiten.

Eine weitere vorteilhafte Ausgestaltung der Erfindung läßt sich erzielen, wenn der lichte Querschnitt der Grobgut-Austragöffnung einstellbar ist. Hierdurch ergibt sich eine weitere Möglichkeit, den Grobgutaustritt zu beeinflussen und irgendwelchen Verstopfungsneigungen entgegenzuwirken. Dies kann aber auch dadurch erreicht werden, daß der lichte Querschnitt jeder Grobgut-Austragöffnung periodisch veränderbar ist, d.h. wenn diese lichte Querschnitt je nach Bedarf und gegebenenfalls durch Eingriff und Steuerung von außen her periodisch erweitert oder verkleinert werden kann.

Wie anhand von Ausführungsbeispielen noch näher erläutert werden wird, bestehen darüber hinaus noch mehrere vorteilhafte Weiterbildungsmöglichkeiten, um sowohl den Klassierungs-Wirkungsgrad als auch die Durchsatzleistung dieser Naßklassiervorrichtung zu beeinflussen, beispielsweise indem nur ein einziger spiralförmig verlaufender Trennkanal oder wenigstens zwei solcher Trennkanäle in einer Querschnittsebene des Klassierrotors ausgebildet sind; darüber hinaus kann der Klassierrotor nur einen einzigen etwa scheibenförmigen Rotorkörper mit wenigstens einem etwa spiralförmig verlaufenden Trennkanal oder auch mehrere unmittelbar übereinander angeordnete, zu einer Einheit zusammengebaute, etwa scheibenförmige Rotorkörper mit jeweils wenigstens einem darin ausgebildeten, spiralförmigen Trennkanal besitzen.

Bei jeder Ausbildungsart der erfindungsgemäßen Klassiervorrichtung und insbesondere des darin drehbar angeordneten Klassierrotors wird das zu klassierende Feststoffgemisch als Flüssigkeitssuspension mit einem gewissen Überdruck dem Aufgabegut-Zuführkanal zugeführt. Dadurch, daß die gesamte Aufgabegut-Zuführmenge größer ist als die am Außenumfang des Rotors ausgetragene Grobgut-Teilmenge (Grobgutfraktion) wird das einer geringeren Fliehkraftbeeinflussung ausgesetzte Feingut in den Feingut-Umlenkkanal abgelenkt und zwangsläufig radial nach innen über den zentral dort angeordneten axialen Feingut-Abführkanal abgeführt. Dabei kann die Vorrichtung auch so betrieben werden, daß zumindest im Unterteil des Gehäuses - je nach Einsatzfall - ein Unterdruck (Vakuum) oder ein Überdruck aufrechterhalten wird.

Die Erfindung sei nachfolgend anhand der Zeichnung näher erläutert. In dieser weitgehend schematisch gehaltenen Zeichnung zeigen
- Fig.1: ein vereinfachte Vertikalschnittansicht der erfindungsgemäßen Naßklassiervorrichtung mit vertikaler Achse;
- Fig.2: eine Querschnittsansicht durch Vorrichtungsgehäuse und Klassierrotor bei einer Ausführungsart des Klassierrotors mit zwei Trennkanälen;
- Fig.3: eine ähnliche Querschnittsansicht wie Fig.2, jedoch bei einer Ausführungsform des Klassierrotors mit nur einem Trennkanal;
- Fig.4: eine vereinfachte Vertikalschnittansicht der Naßklassiervorrichtung mit schräggestellter Achse.

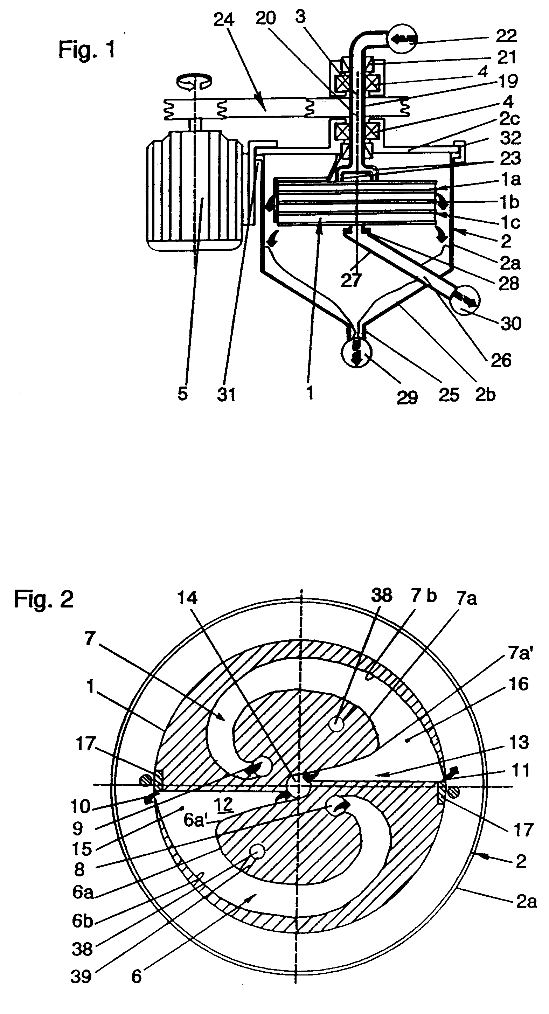

Ein erstes Ausführungsbeispiel der erfindungsgemäßen Naßklassiervorrichtung sei anhand der Fig.1 und 2 erläutert. Diese Vorrichtung dient zum Trennen bzw. Klassieren eines in einer Flüssigkeit suspendierten Feststoffgemisches in eine Grobgut- und in eine Feingutfraktion, wobei angenommen sei, daß die Naßklassiervorrichtung Teil einer Naßmahlanlage ist und daß das in Flüssigkeit suspendierte Feststoffgemisch als Zerkleinerungsprodukt von einer ebenfalls zur Mahlanlage gehörenden Mühle stammt.

Ein Hauptbestandteil dieser Naßklassiervorrichtung ist ein Klassierrotor 1, der in einem feststehenden Gehäuse 2 um eine zentrale Drehachse 3 drehbar gelagert (in Lagern 4) und von einem Motor 5 drehend angetrieben werden kann, worauf später noch etwas näher eingegangen wird. Der Klassierrotor 1 enthält in diesem Ausführungsbeispiel - wie in Fig.2 gezeigt - zwei in ihn eingearbeitete gleichartig bzw. gleichförmig ausgebildete Trennkanäle 6, 7, die sich - im Grundriß auf den Klassierrotor 1 betrachtet (Fig.2) - jeweils von einem Aufgabegut-Zuführkanal 8 bzw. 9 bis zu einer Grobgut-Austragsöffnung 10 bzw. 11 am Außenumfang des Klassierrotors 1 etwa spiralförmig erstrecken. Der lichte Querschnitt jedes spiralförmigen Trennkanales 6, 7 erweitert sich - wie in Fig.2 gut zu erkennen ist - kontinuierlich von innen nach außen. Ferner geht - bei Betrachtung des horizontalen Querschnitts des Klassierrotors 1 in Fig.2 - vorzugsweise etwa im äußeren Umfangsbereich des Klassierrotors 1 die innere Spiralwandung 6a bzw. 7a jedes Trennkanales 6, 7 in einen Umlenkabschnitt 6a' bzw. 7a' über. Von hier aus führt von jedem Trennkanal 6, 7 ein gesonderter Feingut-Umlenkkanal 12 bzw. 13 zu einem gemeinsamen axialen Feingut-Abführkanal 14, der etwa in Form einer Bohrung zentral bzw. koaxial zur zentralen Drehachse 3 in den Klassierrotor 1 eingearbeitet ist. Die Feingut-Umlenkkanäle 12, 13 führen damit vom zugehörigen Trennkanal 6 bzw. 7 annähernd radial zu diesem Feingut-Abführkanal 14. Die bereits weiter oben erwähnten axialen Aufgabegut-Zuführkanäle 8, 9 sind - wie Fig.2 ebenfalls deutlich zeigt - zwar ebenfalls im Bereich der zentralen Drehachse 3 angeordnet, jedoch gegenüber dieser Drehachse 3 und somit gegenüber dem zentralen Feingut-Abführkanal 14 exzentrisch versetzt.

Bei der zuvor geschilderten Ausführung jedes Trennkanales 6, 7 innerhalb des Klassierrotors 1 ist im Bereich zwischen der durch den jeweiligen Umlenkabschnitt 6a' bzw. 7a' gebildeten Umlenkstelle zum Feingut-Umlenkkanal 12 bzw. 13 und der zugehörigen Grobgut-Austragsöffnung 10, 11 ein in Querrichtung des Klassierrotors 1 erweiterter Trennraum 15 bzw. 16 ausgebildet.

Der lichte Querschnitt jedes spiralförmigen Trennkanales 6, 7 ist bevorzugt als etwa rechteckiger Querschnitt ausgebildet, dessen lange Rechteckseiten (parallel zur Zeichenebene der Fig.2) im wesentlichen rechtwinklig zur zentralen Drehachse 3 verlaufen. Dieser lichte Querschnitt jedes spiralförmigen Trennkanales 6, 7 wird dabei radial nach innen durch die bereits weiter oben erwähnte innere Spiralwandung 6a bzw. 7a und radial nach außen durch eine äußere Spiralwandung 6b bzw. 7b begrenzt, die etwa parallel zur Drehachse 3 verlaufen. Hierbei führt die äußere Spiralwandung 6b bzw. 7b direkt zu der vorzugsweise stützförmig gestalteten Grobgutaustragsöffnung 10 bzw. 11. Der lichte Querschnitt der Grobgut-Austragsöffnung 10, 11 jedes Trennkanales 6 bzw. 7 ist zweckmäßig einstellbar. Diese Einstellbarkeit kann auf jede sinnvolle Weise erreicht werden, und zwar sowohl im Stillstand des Klassierrotors als auch während des Betriebes. Bei dem in Fig.2 veranschaulichten Ausführungsbeispiel wird die eine Seite jeder Grobgut-Austragöffnung 10, 11 an einer Seite durch eine etwa keilförmige Leiste 17 begrenzt, die in ihrer Umfangsrichtung in der Weise verstellbar ist, daß die zugehörige Grobgut-Austragöffnung 10 bzw. 11 in ihrer Weite (in Umfangsrichtung) entsprechend vergrößert oder verkleinert werden kann. Durch entsprechende konstruktive Maßnahmen kann im Bedarfsfalle aber auch dafür gesorgt werden, daß der lichte Querschnitt jeder Grobgut-Austragöffnung 10 bzw. 11 periodisch vergrößert oder verkleinert werden kann, beispielsweise nach jeder Rotorumdrehung oder auch nach einer vorgegebenen Anzahl von Rotorumdrehungen, was jeweils von außen her und/oder mit entsprechender Steuerung jeweils durch ein geeignetes Verstellgestänge, mittels Umlenkhebel, Nockensteuerung oder dgl. geschehen kann, wobei diese periodische Veränderbarkeit gegebenenfalls auch in Kombination mit der keilförmigen Leiste 17 vorgesehen sein kann.

Bei dem in Fig.2 veranschaulichten Beispiel mit zwei etwa spiralförmig verlaufenden Trennkanälen in einer Querschnittsebene im Klassierrotor 1 sind die beiden Trennkanäle 6, 7 in je einer Rotorhälfte (Rotor-Halbkreis) gleichgroß und gleichartig ausgebildet, wobei jeder Trennkanal 6, 7 sich über einen Teilumfangsbereich des Klassierrotors 1 von annähernd 180° erstreckt. Wie sich ferner aus den obigen Erläuterungen bereits weitgehend ergibt, ist dabei jedem Trennkanal 6, 7 ein gesonderter Aufgabegut-Zuführkanal 8 bzw. 9, eine gesonderte Grobgut-Austragöffnung 10 bzw. 11 und ein gesonderter Feingut-Umlenkkanal 12 bzw. 13 zugeordnet; beiden Trennkanälen 6, 7 bzw. den zugehörigen Feingut-Umlenkkanälen 12 bzw. 13 ist jedoch ein gemeinsamer, zentraler Feingut-Abführkanal 14 zugeordnet.

Der Klassierrotor 1 kann nun je nach der gewünschten Durchsatzleistung nur einen etwa scheibenförmigen Rotorkörper oder - wie in Fig.1 veranschaulicht - mehrere unmittelbar übereinander angeordnete, zu einer Einheit zusammengebaute, etwa scheibenförmige Rotorkörper 1a, 1b, 1c ... 1n mit jeweils wenigstens einem darin ausgebildeten spiralförmigen Trennkanal (im Beispiel der Fig.1 und 2 mit zwei solchen Trennkanälen 6, 7) aufweist. In jedem Falle ist dabei der Klassierrotor 1 am oberen Ende des Gehäuses 2 über eine Hohlwelle 19 in den Lagern 4 drehbar gelagert. In dieser Hohlwelle 19 ist ein Aufgabegut-Einlaufrohr 20 angeordnet, das über ein geeignetes Dichtungssystem 21 mit einer oberen Aufgabegut-Zuführeinrichtung 22 verbunden ist und die dementsprechend diese Aufgabegut-Zuführeinrichtung 22 mit jedem Aufgabegut-Zuführkanal 8 bzw. 9 im Klassierrotor 1 verbindet, beispielsweise durch die in Fig.1 angedeuteten Abzweigrohre 23. Bei der in Fig.1 veranschaulichten Ausführung des Klassierrotors 1 mit mehreren unmittelbar übereinander angeordneten Rotorkörpern 1a, 1b ... 1n sind die Trennkanäle (z. B. 6, 7 in Fig.2) aller Rotorkörper parallel zueinander von der gemeinsamen Aufgabegut-Zuführeinrichtung 22 (über das Einlaufrohr 20) mit Aufgabegut beaufschlagbar.

Der Klassierrotor 1 wird über seine Hohlwelle 19 sowie eine geeignete Antriebsverbindung, beispielsweise in Form eines Riementriebes 24, vom Antriebsmotor 5 zweckmäßig mit variabler Drehzahl angetrieben.

Das im wesentlichen geschlossene Gehäuse 2 ist mit der bereits erwähnten Aufgabegut-Zuführeinrichtung 22 an seinem oberen Ende sowie mit einem Grobgutauslauf 25 und einem Feingutauslauf 26 etwa im Bereich seines unteren Endes versehen. Das Gehäuse 2 selbst ist ferner in einen zylindrischen Oberteil 2a, der den Klassierrotor 1 mit entsprechendem radialen Abstand umgibt, sowie in einen etwa trichterförmigen Unterteil 2b unterteilt, dessen Trichterwand - wie in Fig.1 dargestellt - sich zum Grobgutauslauf bzw. Gutgutauslaufstutzen 25 verengt. Ferner wird diese konische Trichterwand des Unterteils 2b von einem den Feingutabführkanal 14 des Klassierrotors 1 mit dem Feingutauslauf 26 verbindenden, geneigt verlaufenden Feingutablaufrohr 27 durchsetzt, dessen oberes, gehäuseinneres Ende über eine geeignete Dichtung bzw. Labyrithdichtung 28 mit dem sich zusammen mit dem Klassierrotor 1 drehenden Feingut-Ablaufkanal 14 in Verbindung steht. Je nach der Betriebsweise und dem Einsatzfall dieser Naßklassiervorrichtung kann es auch zweckmäßig sein, dem Grobgutauslauf 25 und dem Feingutauslauf 26 je eine zusätzliche Austragshilfe, vorzugsweise in Form von geeigneten Fördereinrichtungen zuzuordnen. Im Beispiel der Fig.1 sei angenommen, daß dem Grobgutauslauf 25 beispielsweise eine Pumpe 29 und dem Feingutauslauf 26 ebenfalls eine Pumpe 30 zugeordnet sind; an Stelle einer solchen Förderpumpe könnte auch eine Förderschnecke, eine Austragsschleuse oder dgl. vorgesehen werden.

Zur einfacheren Reinigung und Kontrolle für die im Gehäuseinnern untergebrachten Vorrichtungsteile kann es ferner zweckmäßig sein, wenn dieses Gehäuse 2 mit einem Deckel 2c versehen ist, der beispielsweise mit Hilfe eines am oberen Ende des Oberteiles 2a angebrachten Scharniers 31 aufgeklappt und geöffnet werden kann, wobei ein Verschlußbügel 32 dafür sorgen kann, das Gehäuse 2 dicht zu verschließen, so daß z. B. auch unter Vakuum oder unter Überdruck oder auch unter einer Inertgas-Atmosphäre gearbeitet werden kann.

Die bereits erwähnte Aufgabegut-Zuführeinrichtung kann ebenfalls durch jede geeignete Fördereinrichtung gebildet werden. Im Beispiel der Fig.1 sei angenommen, daß diese Aufgabegut-Zuführeinrichtung 22 ebenfalls durch eine geeignete Förderpumpe gebildet wird. Hierdurch kann das Aufgabegut, also das in einer Flüssigkeit suspendierte Feststoffgemisch, das in Grobgut (Grobgutfraktion) und Feingut (Feingutfraktion) klassiert werden soll, unter Zwangszuführung dem Klassierrotor 1 über das Einlaufrohr 20 aufgegeben werden.

Bei der in Fig.2 veranschaulichten Ausbildung des Klassierrotors 1 mit den darin eingearbeiteten spiralförmigen Trennkanälen 6, 7 wird ferner angenommen, daß dieser Klassierrotor 1 - bei Betrachtung auf die dortige Grundriß- bzw. Querschnittsdarstellung - links herum drehend angetrieben wird. Hierbei kann es jedoch vielfach zweckmäßig sein, auch die Möglichkeit einer entgegengesetzten Drehrichtung (in Fig.2 also nach rechts herum) vorzusehen, wodurch beispielsweise eine bessere Abreinigung etwa im Bereich der Grobgut-Austragsöffnungen 10, 11 und/oder der Trennkanäle 6, 7 unterstützt werden kann.

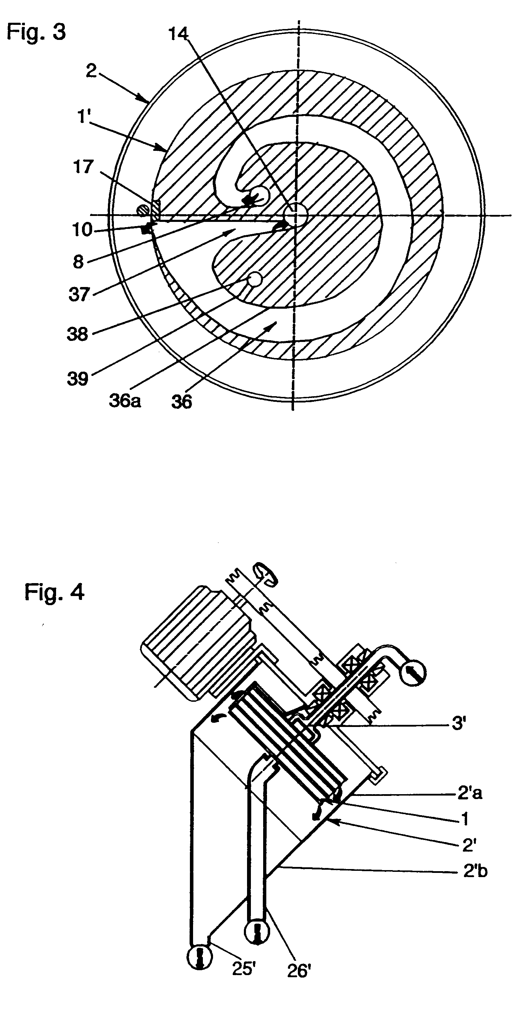

Eine Ausführungsvariante des Zuvorbeschriebenen und insbesondere anhand Fig.2 veranschaulichten ersten Ausführungsbeispieles ergibt sich aus Fig.3. Hiernach ist der ansonsten weitgehend gleichartig wie im ersten Ausführungsbeispiel konstruierte Klassierrotor 1' in der betrachteten Querschnittsebene mit nur einem einzigen spiralförmigen Trennkanal 36 versehen, der sich - im Gegensatz zu den Trennkanälen 6, 7 in Fig.2 - über einen Umfangsbereich des Klassierrotors 1' von annähernd etwa 360° (eventuell sogar auch mehr) erstreckt. Dieser Trennkanal 36 kann ansonsten in annähernd gleichartiger Weise (nur angepaßt an die größere Umfangserstreckung) gestaltet sein, wie es weiter oben insbesondere anhand Fig.2 beschrieben worden ist. Dementsprechend führt auch von diesem spiralförmigen Trennkanl 36 ein Feingut-Umlenkkanal 37 wiederum zum zentralen, axialen Feingut-Abführkanal 14, während ein hierzu exzentrisch versetzter, axial verlaufender Aufgabegut-Zuführkanal 8 für die Zuführung des zu klassierenden Feststoffgemisches am radial inneren Anfang des spiralförmigen Trennkanales 36 sorgt. Am Außenumfang dieses Klassierrotors 1' ist dementsprechend auch nur eine einzige Grobgut-Austragöffnung 10 vorhanden, die wiederum durch eine keilförmige Leiste 17 oder dgl. in ihrer lichten Weite verstellt werden kann.

Unabhängig davon, ob im Klassierrotor 1 bzw. 1' nur ein einziger spiralförmiger Trennkanal 36 oder wenigstens zwei solcher Trennkanäle 6, 7 vorgesehen sind, kann es vielen Einsatzfällen dieser Naßklassiervorrichtung zweckmäßig sein, eine Einrichtung zum Zuführen von Zusatzflüssigkeit an die Innenwandung des bzw. jedes Trennkanales vorzusehen. In den Beispielen der Fig.2 und 3 ist hierfür im Bereich jedes Trennkanales 6, 7, 36 ein axial im Klassierrotor 1 bzw. 1' ausgebildeter Flüssigkeits-Zuführkanal 38 mit einer in Richtung des Rotor-Außenumfangs verlaufenden Querbohrung 39 vorgesehen, die jeweils an der zugehörigen Innenwandung 6a, 7a bzw. 36a des entsprechenden Trennkanales 6, 7, 36 ausmündet. Die Zuführung der Zusatzflüssigkeit zu den entsprechenden Zuführkanälen 38 kann beispielsweise ebenfalls durch die Hohlwelle 19 mit Hilfe einer entsprechenden Flüssigkeitsleitung geschehen. Durch das Zuführen einer Zusatzflüssigkeit an den genannten Stellen kann in vielen Fällen die Trennschärfe während des Klassiervorganges noch verbessert werden.

Während insbesondere anhand der Fig.1 davon ausgegangen wird, daß die zentrale Drehachse 3 und damit auch die zentrale Achse dieser Klassiervorrichtung vertikal ausgerichtet ist, bei im wesentlichen symmetrischer Gestaltung des Vorrichtungsgehäuses 2, kann es für manche Einsatzfälle auch von Vorteil sein, die erfindungsgemäße Naßklassiervorrichtung mit mehr oder weniger schräggestellter bzw. gegenüber der Vertikalen geneigten Vorrichtungs- und Drehachse 3' auszuführen. Ein solches Beispiel ist in Fig.4 veranschaulicht. Wie sich dieser Vertikalschnittansicht entnehmen läßt, unterscheidet sich dieses Ausführungsbeispiel gegenüber dem oben beschriebenen ersten Ausführungsbeispiel weitgehend nur durch eine gewisse Anpassung des Gehäuses 2', während der darin drehbar gelagerte und antreibbare Klassierrotor 1 vollkommen gleichartig ausgeführt sein und arbeiten kann wie gemäß den vorhergehenden Beispielen. Dementsprechend weist das Vorrichtungsgehäuse 2' wiederum einen zylindrischen Oberteil 2'a und einen sich trichterförmig nach unten anschließenden Unterteil 2'b an, der in diesem Falle jedoch nicht konisch-symmetrisch (wie gemäß Fig.1), sondern einseitig trichterförmig ausgebildet sein kann. Hierbei können auch der Grobgutauslauf 25' und der Feingutauslauf 26' - wie Fig.4 zeigt - relativ eng einander benachbart angeordnet sein.

Die obige Beschreibung der verschiedenen Ausführungsmöglichkeiten dieser erfindungsgemäßen Naßklassiervorrichtung läßt deutlich erkennen, daß diese Vorrichtung in optimaler Weise sowohl verschiedenen Feststoffgemischen bzw. Produktarten (jeweils Flüssigkeitssuspensionen) als auch verschiedenen örtlichen Gegebenheiten angepaßt werden kann. Insbesondere hinsichtlich der gewünschten Naßklassierfunktion bzw. -arbeit kann diese erfindungsgemäße Vorrichtung mit folgenden Parametern, die sich auch gegenseitig beeinflussen können, optimal für die verschiedensten Produkte und Klassieraufgaben eingestellt werden:
- Durch eine variable Drehzahl des Klassierrotors 1, 1' sowie durch eine verschiedene Anzahl von scheibenartigen Rotorkörpern im Klassierrotor kann die Höhe der Fliehkraft beeinflußt werden, die auf das zu trennende Feststoffgemisch einwirkt.
- Durch die Wahl des Durchmessers des Klassierrotors 1, 1' kann zum einen die Länge der einzelnen Trennkanäle 6, 7, 36, und damit die Verweilzeit des Feststoffgemisches in diesen Trennkanälen, als auch das notwendige Gefälle zum Austragen des Grobgutes beeinflußt werden (die Fliehkrafteinwirkung auf das zu trennende Feststoffgemisch wird größer bei zunehmendem Durchmesser).
- Der Verlauf des Gefälles (Spiralsteigung) an der äußeren Spiralwandung 6b bzw. 7b der Trennkanäle 6, 7, 36 beeinflußt die Eigenförderung im zugehörigen Trennkanal 6, 7, 36 sowie auch die Größe der Fliehkräfte während des Klassiervorganges. Dies kann bei Produkten wichtig sein, die leicht zum Ansetzen und Aufseparieren neigen und deshalb meistens ein größeres Gefälle und/oder eine entsprechende Gleitbeschichtung benötigen.
- Das Verhältnis zwischen der Breite und der Höhe jedes - vorzugsweise rechteckigen - Trennkanales 6, 7, 36 beeinflußt ebenfalls die Strömung, die Verweilzeit und die Weglänge der zu klassierenden Gutteilchen im zugehörigen Trennkanal.
- Die Durchsatzmenge des zu klassierenden Aufgabegutes (Feststoffgemisches) beeinflußt ferner die Strömung (laminar oder turbulent) und die Verweilzeit im jeweiligen Trennkanal, aber auch die jeweilige Trenngrenze, d. h. das Verhältnis zwischen Grobgutmenge und Feingutmenge.
- Der lichte Querschnitt der Grobgut-Austragöffnungen 10, 11 am äußeren Ende (Außenumfang des Klassierrotors) des Trennkanales beeinflußt vor allem den Anteil des auszutragenden Grobgutes und damit auch die Trenngrenze für die Grobgutfraktion. Somit können durch die Anordnung von Grobgut-Austragsöffnungen an verschiedenen Positionen (am Außenumfang des Klassierrotors) verschiedene Fraktionen bestimmt und erfaßt werden.
- Die konstruktive Länge jedes Trennkanales 6, 7, 36 (z. B. über nur einen Teilbereich des Rotorumfangs oder über wenigstens 360° des Rotorumfangs) sowie die Anzahl und relative Zusammenordnung dieser Trennkanäle im Klassierrotor bzw. in den zusammengebauten Rotorkörpern beeinflussen ebenfalls vor allem die Zeit, in der die Fliehkraft auf das zu trennende Feststoffgemisch einwirken kann.

## Patentansprüche

1. Vorrichtung zum Naßklassieren eines in einer Flüssigkeit suspendierten Feststoffgemisches in Grobgut und Feingut, enthaltend einen in einem feststehenden Gehäuse (2, 2') um eine zentrale Drehachse (3, 3') drehend antreibbaren Klassierrotor (1) mit wenigstens einem darin ausgebildeten Trennkanal (6, 7, 36), der von einem im Bereich der Drehachse vorgesehenen Aufgabegut-Zuführkanal (8, 9) bis zu einer Grobgut-Austragöffnung (10, 11) am Außenumfang des Klassierrotors verläuft und von dem ein Feingut-Umlenkkanal (12, 13, 37) zu einem axialen Feingut-Abführkanal (14) im Bereich der Drehachse geführt ist,
dadurch gekennzeichnet,
daß der Trennkanal (6, 7, 36) sich - im Grundriß auf den Klassierrotor (1) betrachtet - vom Aufgabegut-Zuführkanal (8, 9) bis zur Grobgut-Austragöffnung (10, 11) spiralförmig erstreckt, während der Feingut-Umlenkkanal (12, 13, 37) radial zu dem koaxial zur zentralen Drehachse (3, 3') ausgerichteten Feingut-Abführkanal (14) verläuft, wobei der Aufgabegut-Zuführkanal (8, 9) gegenüber der Drehachse exzentrisch versetzt ist.

2. Vorrichtung nach Anspruch 1, dadurch gekennzeichnet, daß jeder spiralförmige Trennkanal (6, 7) sich über wenigstens einen Teilumfangsbereich des Klassierrotors (1) erstreckt.

3. Vorrichtung nach Anspruch 1, dadurch gekennzeichnet, daß sich der spiralförmige Trennkanal (36) über einen Umfangsbereich des Klassierrotors (1') von wenigstens etwa 360° erstreckt.

4. Vorrichtung nach Anspruch 1, dadurch gekennzeichnet, daß der lichte Querschnitt jedes spiralförmigen Trennkanals (6, 7, 36) sich kontinuierlich von innen nach außen erweitert, wobei bevorzugt ein etwa rechteckiger Querschnitt ausgebildet ist, dessen lange Rechteckseiten im wesentlichen rechtwinklig zur Drehachse (3, 3') verlaufen.

5. Vorrichtung nach Anspruch 4, dadurch gekennzeichnet, daß jeder spiralförmige Trennkanal (6, 7, 36) im Bereich zwischen der Umlenkstelle (6a', 7a') zum Feingut-Umlenkkanal (12, 13, 37) und der Grobgut-Austragöffnung (10, 11) einen erweiterten Trennraum (15, 16) aufweist.

6. Vorrichtung nach Anspruch 1, dadurch gekennzeichnet, daß der lichte Querschnitt der Grobgut-Austragöffnung (10, 11) einstellbar ist.

7. Vorrichtung nach Anspruch 1, dadurch gekennzeichnet, daß in einer Querschnittsebene im Klassierrotor (1) wenigstens zwei etwa spiralförmig verlaufende Trennkanäle (6, 7) ausgebildet sind, denen je ein gesonderter Aufgabegut-Zuführkanal (8, 9), eine gesonderte Grobgut-Austragöffnung (10, 11) und ein gesonderter Feingut-Umlenkkanal (12, 13), jedoch ein gemeinsamer Feingut-Abführkanal (14) zugeordnet ist.

8. Vorrichtung nach Anspruch 1, dadurch gekennzeichnet, daß der Klassierrotor (1) einen etwa scheibenförmigen Rotorkörper besitzt, der an einem Ende des Gehäuses (2, 2') über eine Hohlwelle (19) drehbar gelagert ist, in der ein Aufgabegut-Einlaufrohr (20) angeordnet ist, das eine Aufgabegut-Zuführeinrichtung (22) mit dem (jedem) Aufgabegut-Zuführkanal (8, 9) im Klassierrotor (1) verbindet.

9. Vorrichtung nach Anspruch 1, dadurch gekennzeichnet, daß der Klassierrotor (1) mehrere unmittelbar übereinander angeordnete, zu einer Einheit zusammengebaute, etwa scheibenförmige Rotorkörper (1a, 1b, 1c ... 1n) mit jeweils wenigstens einem darin ausgebildeten, spiralförmigen Trennkanal (6, 7, 36) aufweist und an einem Ende des Gehäuses (2, 2') über eine Hohlwelle (19) drehbar gelagert ist, in der ein Aufgabegut-Einlaufrohr (20) angeordnet ist, das eine Aufgabegut-Zuführeinrichtung (22) mit dem (jedem) Aufgabegut-Zuführkanal (8, 9) im Klassierrotor (1) verbindet, wobei die Trennkanäle (6, 7) aller Rotorkörper parallel zueinander und von der gemeinsamen Aufgabegut-Zuführeinrichtung (22) mit Aufgabegut beaufschlagbar sind.

10. Vorrichtung nach Anspruch 8 oder 9, dadurch gekennzeichnet, daß der Klassierrotor (1) mit variabler Drehzahl antreibbar ist.

11. Vorrichtung nach Anspruch 1, dadurch gekennzeichnet, daß eine Einrichtung (38, 39) zum Zuführen von Zusatzflüssigkeit an der Innenwandung (6a, 7a, 36a) jedes Trennkanales (6, 7, 36) vorgesehen ist.

12. Vorrichtung nach Anspruch 1, dadurch gekennzeichnet, daß das mit einer Aufgabegut-Zuführeinrichtung (22), einem Grobgut-Auslauf (25) und einem Feingut-Auslauf (26) versehene, im wesentlichen geschlossene Gehäuse (2, 2') einen den Klassierrotor (1) mit radialem Abstand umgebenden zylindrischen Oberteil (2a, 2'a) sowie einen sich zum Grobgut-Auslauf verengenden, trichterförmigen Unterteil (2b, 2'b) aufweist, dessen Trichterwand von einem den Feingut-Abführkanal (14) mit dem Feingutauslauf verbindenden Feingut-Ablaufrohr (27) durchsetzt wird.

13. Vorrichtung nach Anspruch 12, dadurch gekennzeichnet, daß zumindest der Gehäuseunterteil (2b) unter Überdruck oder Unterdruck betreibbar ist.

14. Vorrichtung nach Anspruch 12, dadurch gekennzeichnet, daß dem Grobgutauslauf (25) und dem Feingutauslauf (26) zusätzliche Austragshilfen in Form von Fördereinrichtungen (29, 30) zugeordnet sind.

15. Vorrichtung nach Anspruch 1, dadurch gekennzeichnet, daß der lichte Querschnitt jeder Grobgut-Austragöffnung (10, 11) periodisch veränderbar ist.

## Claims

1. Device for wet classification of a mixture of solids suspended in a fluid into oversize material and fine material, containing a classification rotor (1) which can be driven in rotation about a central axis of rotation (3, 3') in a stationary housing (2, 2') and has at least one dividing channel (6, 7, 36) constructed therein which extends from a feed material delivery channel (8, 9) to an oversize material discharge opening (10, 11) on the outer periphery of the classification rotor and from which a fine material deflection channel (12, 13, 37) is led to an axial fine material discharge channel (14) in the region of the axis of rotation, characterised in that the dividing channel (6, 7, 36) - considered in plan view of the classification rotor (1) - extends spirally from the feed material delivery channel (8, 9) to the oversize material discharge opening (10, 11), whilst the fine material deflection channel (12, 13, 37) extends radially with respect to the fine material discharge channel (14) which is aligned coaxially with the central axis of rotation (3, 3'), the feed material delivery channel (8, 9) being offset eccentrically with respect to the axis of rotation.

2. Device as claimed in Claim 1, characterised in that each spiral dividing channel (6, 7) extends over at least a part of the peripheral region of the classification rotor (1).

3. Device as claimed in Claim 1, characterised in that the spiral dividing channel (36) extends over a peripheral region of the classification rotor (1') of at least approximately 360°.

4. Device as claimed in Claim 1, characterised in that the internal cross-section of each spiral dividing channel (6, 7, 36) widens continuously from the interior towards the exterior, an approximately rectangular cross-section being preferably constructed in which the long sides of the rectangle extend substantially at right angles to the axis of rotation (3, 3').

5. Device as claimed in Claim 4, characterised in that each spiral dividing channel (6, 7, 36) has a widened dividing chamber (15, 16) in the region between the deflection point (6a', 7a') to the fine material deflection channel (12, 13, 37) and the oversize material discharge opening (10, 11).

6. Device as claimed in Claim 1, characterised in that the internal cross-section of the oversize material discharge opening (10, 11) is adjustable.

7. Device as claimed in Claim 1, characterised in that in a cross-sectional plane in the classification rotor (1) at least two approximately spirally extending dividing channels (6, 7) are constructed, each having associated with it a separate feed material delivery channel (8, 9), a separate oversize material discharge opening (10, 11) and a separate fine material deflection channel (12, 13) but a common fine material discharge channel (14).

8. Device as claimed in Claim 1, characterised in that the classification rotor (1) has an approximately disc-shaped rotor body which is rotatably mounted by way of a hollow shaft (19) at one end of the housing (2, 2'), and in the hollow shaft is disposed a feed material inlet pipe (20) which connects a feed material delivery arrangement (22) to the (each) feed material delivery channel (8, 9) in the classification rotor (1).

9. Device as claimed in Claim 1, characterised in that the classification rotor (1) has a plurality of approximately disc-shaped rotor bodies (1a, 1b, 1c ... 1n), which are disposed immediately above one another and are assembled into one unit and each have at least one spiral dividing channel (6, 7, 36) constructed therein, and is rotatably mounted at one end of the housing (2, 2') by way of a hollow shaft (19) which connects a feed material delivery arrangement (22) to the (each) feed material delivery channel (8, 9) in the classification rotor (1), wherein the dividing channels (6, 7) of all rotor bodies can be supplied with feed material parallel to one another and from the common feed material delivery arrangement (22).

10. Device as claimed in Claim 8 or 9, characterised in that the classification rotor (1) can be driven at variable speed.

11. Device as claimed in Claim 1, characterised in that an arrangement (38, 39) for delivering additional fluid is provided on the inner wall (6a, 7a, 36a) of each dividing channel (6, 7, 36).

12. Device as claimed in Claim 1, characterised in that the substantially closed housing (2, 2') which is provided with a feed material delivery arrangement (22), an oversize material outlet (25) and a fine material outlet (26) has a cylindrical upper part (2a, 2'a) which surrounds the classification rotor (1) with a radial clearance as well as a hopper-shaped lower part (2b, 2'b) which narrows towards the oversize material outlet and of which the hopper wall has passing through it a fine material outlet pipe (27) which connects the fine material discharge channel (14) to the fine material outlet.

13. Device as claimed in Claim 12, characterised in that at least the lower part (2b) of the housing can be operated with overpressure or underpressure.

14. Device as claimed in Claim 12, characterised in that additional aids to discharge in the form of conveying arrangements (29, 30) are associated with the oversize material outlet (25) and the fine material outlet (26).

15. Device as claimed in Claim 1, characterised in that the internal cross-section of each oversize material discharge opening (10, 11) can be varied periodically.

## Revendications

1. Dispositif de classification à voie humide d'un mélange de substance solide en suspension dans un liquide en matière à granulométrie grossière et en matière a granulométrie fine, comprenant un rotor de classification (1) pouvant être entraîné en rotation dans une enveloppe fixe (2, 2') autour d'un axe central de rotation (3, 3') et comprenant au moins un canal de séparation réalisé intérieurement (6, 7, 36), qui part d'un canal d'arrivée de matière chargée (8, 9) prévu à proximité de l'axe de rotation et va jusqu'à une ouverture de décharge de la matière à granulométrie grossière (10, 11) située sur la circonférence extérieure du rotor de classification, et dont part un canal de déviation de la matière à granulométrie fine (12, 13, 37) qui se dirige sur un canal axial d'évacuation de la matière à granulométrie fine (14) qui est situé dans la région de l'axe de rotation.
caractérisé
en ce que le canal de séparation (6, 7, 36) - observé en vue en plan sur le rotor de classification (1) - forme une spirale entre le canal (8, 9) d'arrivée de la matière chargée et l'ouverture (10, 11) de décharge de la matière à granulométrie grossière, tandis que le canal de déviation de la matière à granulométrie fine (12, 13, 37) est orienté radialement vers le canal d'évacuation de la matière à granulométrie fine (14) qui est coaxial à l'axe central de rotation (3, 3'), le canal (8, 9) d'arrivée de matière chargée étant décalé excentriquement par rapport à l'axe de rotation.

2. Dispositif selon la revendication 1, caractérisé en ce que chaque canal de séparation en spirale (6, 7) se prolonge sur au moins une partie de la circonférence du rotor de classification (1).

3. Dispositif selon la revendication 1, caractérisé en ce que le canal de séparation en spirale (36) se prolonge sur une zone de la circonférence du rotor de classification (1') qui est d'au moins environ 360°.

4. Dispositif selon la revendication 1, caractérisé en ce que la section transversale de l'ouverture de chaque canal de séparation en spirale (6, 7, 36) s'élargit en continu de l'intérieur vers l'extérieur et une section transversale à peu près rectangulaire, dont les côtés longs du rectangle sont sensiblement perpendiculaires à l'axe de rotation (3, 3'), est de préférence réalisée.

5. Dispositif selon la revendication 4, caractérisé en ce que chaque canal de séparation en spirale (6, 7, 36) comprend une chambre de séparation élargie (15, 16) entre le lieu de déviation (6a', 7a') vers le canal de déviation de la matière à granulométrie fine (12, 13, 37) et l'ouverture (10, 11) de décharge de la matière à granulométrie grossière.

6. Dispositif selon la revendication 1, caractérisé en ce que la section transversale libre de l'ouverture (10, 11) de décharge de la matière à granulométrie grossière est réglable.

7. Dispositif selon la revendication 1, caractérisé en ce qu'un canal indépendant d'arrivée de la matière chargée (8, 9), une ouverture indépendante de décharge de la matière à granulométrie grossière (10, 11) et un canal indépendant de déviation de la matière à granulométrie fine (12, 13) sont associés à au moins deux canaux de séparation sensiblement en spirale (6, 7) qui sont réalisés dans un plan transversal à l'intérieur du rotor de classification (1), mais un canal commun d'évacuation de la matière à granulométrie fine (14) leur est associé.

8. Dispositif selon la revendication 1, caractérisé en ce que le rotor de classification (1) comprend un corps sensiblement discoïdal de rotor qui est monté rotatif à une extrémité de l'enveloppe (2, 2') au moyen d'un arbre creux (19) dans lequel est disposé un tube (20) d'admission de la matière de chargement qui raccorde un dispositif (22) d'amenée de la matière de chargement et le (chaque) canal (8, 9) d'arrivée de la matière chargée qui se trouve dans le rotor de classification (1).

9. Dispositif selon la revendication 1, caractérisé en ce le rotor de classification (1) comprend plusieurs corps de rotor sensiblement discoïdaux (1a, 1b, 1c ... 1n) directement superposés, réunis en un ensemble et dont chacun comprend intérieurement au moins un canal de séparation en spirale (6, 7, 36) et ce rotor est monté rotatif à une extrémité de l'enveloppe (2, 2') au moyen d'un arbre creux (19) dans lequel est disposé un tube (20) d'admission de la matière de chargement qui raccorde un dispositif (22) d'amenée de la matière chargée et le (chaque) canal (8, 9) d'arrivée de la matière chargée qui se trouve dans le rotor de classification (1), les canaux de séparation (6, 7) de tous les corps de rotor étant alimentés en matière chargée en parallèle et par le dispositif commun (22) d'amenée de la matière chargée.

10. Dispositif selon la revendication 8 ou 9, caractérisé en ce le rotor de classification (1) peut être entraîné à une vitesse variable de rotation.

11. Dispositif selon la revendication 1, caractérisé en ce qu'un dispositif (38, 39) d'amenée d'un complément de liquide sur la paroi intérieure (6a, 7a, 36a) de chaque canal de séparation (6, 7, 36) est prévu.

12. Dispositif selon la revendication 1, caractérisé en ce que l'enveloppe sensiblement fermée (2, 2'), qui est équipée d'un dispositif (22) d'amenée de la matière chargée, d'une décharge (25) de la matière à granulométrie grossière et d'une décharge (26) de la matière à granulométrie fine, comporte une partie supérieure cylindrique (2a, 2'a) enveloppant le rotor de classification (1) à distance radiale, ainsi qu'une partie inférieure (2b, 2'b) en forme de trémie, se rétrécissant vers la décharge de matière à granulométrie grossière et dont la paroi de trémie est traversée par un tube de décharge de la matière à granulométrie fine (27) qui relie le canal d'évacuation de la matière à granulométrie fine (14) et une décharge de la matière à granulométrie fine.

13. Dispositif selon la revendication 12, caractérisé en ce qu'au moins la partie inférieure de l'enveloppe (2b) peut être mise en surpression ou en dépression.

14. Dispositif selon la revendication 12, caractérisé en ce que des systèmes auxiliaires de décharge ayant la forme de dispositifs de transport (29, 30) sont associés à la décharge (25) de matière à granulométrie grossière et à la décharge (26) de la matière à granulométrie fine.

15. Dispositif selon la revendication 1, caractérisé en ce que la section transversale libre de chaque ouverture de décharge de matière à granulométrie grossière (10, 11) est modifiable périodiquement.
